# EUROPEAN PATENT APPLICATION

(11) **EP 2 023 155 A1**
(43) Date of publication of application: **11.02.2009**
(21) Application number: 07425467.3
(22) Date of filing: 25.07.2007
(51) Int. Cl.: G01S 5/14

(54) **GPS receiver comprising a data link via GPRS and/or UMTS**

(71) Applicant: Aneva S.r.l., 35010 Vigodarzere (PD) (IT)
(72) Inventor: Callegari, Valentino, c/o Aneva S.r.l., 35010 Vigodarzere (PD) (IT)
(74) Representative: Vinci, Marcello

(57) **Abstract**

The invention concerns a device (D) for satellite positioning, comprising a system microchip, a GPS receiver, a communication module, of the type GPRS and/or UMTS (G), for sending data (D1) to at least one web server (W), a removable memory support for storing data (D1), and one or more 12C BUS/BUSES. Said system microchip comprises a server for communication.

## Description

The present invention concerns satellite positioning devices and in particular it concerns a new device for satellite positioning, with module/s for communicating and exchanging data in real time with at least one remote terminal unit or server.

Positioning devices are known that employ the satellite positioning system called GPS (Global Positioning System), which uses the signals emitted by satellites orbiting the planet to determinate the earth coordinates of a GPS receiver.

Said coordinates are determined on the basis of the global positioning system (GPS), according to which, knowing the position of three or more orbiting satellites and the time interval needed by the signal emitted to reach the receiver it is possible to determine the position in space of the receiver itself.

GPS devices, commonly called satellite navigators, are currently known and increasingly widespread; they use this technology to determine their own position and, employing the cartography that has already been input in their memory, are capable of tracing one or more possible trajectories to be followed to reach another point in space.

At present, in fact, a wide range of maps including most of the national and international territory is available, with a high degree of precision, comprising not only the main places and roads, but also medium and small roads/streets, areas of interest, hotels and other services.

The user, having a GPS receiver installed for example in his/her car, inputs in the device the coordinates or the data of the destination. The GPS receiver, once activated, tracks the active satellites and receives their signals, with which it determines its exact position and can thus trace the route to be followed to reach the selected destination.

The GPS receiver receives the signals from the satellites at short time intervals and can thus determine its position with good continuity, being able to adapt the route in real time even in case of deviations from the preset direction.

The object of the invention is a new type of satellite positioning device, with modules for communicating and exchanging data in real time with at least one terminal unit or web server.

The main object of the present invention is to be able to determine, at short time intervals, the succession of its own positions using internet communication and to transmit the corresponding data in real time to a terminal unit or web server, through mobile telephony technology, be it of the GSM, GPRS, UMTS type and/or other technology, where the transmitted data can be stored, processed and in any case managed by one or more users.

The present invention can communicate with the web server and/or with a common mobile telephone or PDA, being able, in turn, to receive data by consulting a web page and/or via SMS and/or via "Call ID", by means of which, for example, it is possible to even remotely control some basic functions such as switching on, switching off, alarms.

Another important object of the present invention is to be able to store and file the trajectories, that is, the sequence of positions detected by the GPS and transmitted to the remote terminal, said positions being detected with high precision thanks to special removable memory supports that are inserted in the device itself.

A further important object of the present invention is to ensure immediate traceability of the vehicles equipped with said device, since the positioning data are sent in real time to web servers and/or mobile telephones and/or PDAs and/or personal computers and/or other types of terminal, on which it is thus possible to check the route of the vehicles at any moment.

Another important object of the present invention is to allow detailed reports of the trajectories covered by the vehicle equipped with the new device to be drawn in real time, said reports including also the data relating to average and instantaneous speed, any stops, and so on.

A further important object of the invention is to allow all the data sent to the web server to be stored and filed, so that said data can be successively displayed, managed, processed.

Another important object of the present invention is to be able to check the position and the speed of the vehicles equipped with the new device, thus serving as an anti-theft device or facilitating the recovery of the vehicle in case of theft.

An important advantage offered by this invention lies in that it makes it possible to reduce the costs of data transmission which, for example in the GPRS network, is sold as a "package", which means that it is debited on the basis of the quantity of data transmitted and not of the time of connection, given that in any case connection is always active.

For this reason, since position data consist only of a few bytes and are furthermore compressed and filtered before sending, service costs are limited.

Another important advantage offered by the present invention is represented by the fact that it can be used on any means or vehicle, and can be moved from one vehicle to another with no need for any installation procedure.

Another important advantage of the present invention lies in that it can be used in a direct and practical manner, since it can communicate with the user by means of audio and/or visual messages and furthermore does not require specific data processing knowledge for use.

The present invention can be advantageously and usefully used for collecting, processing and filing data relating to the route of vehicles or fleets of vehicles of any type, like trains or other means for transporting people and/or goods, on which it is installed, with the purpose of optimizing the transport service to the benefit of the managers, the users and the operators inside the vehicle.

The present invention can be usefully applied in particular for real time positioning of vehicles whose position can thus be monitored with high precision and at short time intervals, for example of 1 second.

The data relating to the positions are stored in the removable memory and/or sent, for example less frequently, to the web server.

These and other direct and complementary objects are achieved by the new device for satellite positioning, with modules for communicating and exchanging data in real time with at least one web server.

The new device comprises, in its main parts:
· at least one electronic circuit or system microchip;
· at least one GPS receiver for positioning the device;
· at least one module for internet communication, for example GPRS with TCP/IP and/or UMTS and/or GSM standard and/or other technology, suited to send the positioning data to at least one web server, where they can be consulted, processed, filed and managed in various manners, in real time and/or in a successive moment;
and wherein said data are also filed in at least one removable memory support that can be extracted from the device itself (memory card).

All the data relating to the space coordinates (x, y, z) of the positions occupied over time (t) by said device are thus stored in said removable memory, whose capacity is in the order of the Gigabyte.

Thus said memory stores the data relating to the positions of the device, monitored for example at intervals of one second.

Said data are also sent to said terminal unit, to which they can be sent in a block, for example at intervals of a few seconds, depending on the type of vehicle on which said device is installed.

The new device for satellite positioning functions in GSM and/or GPRS and/or UMTS mode and/or according to the evolution of wireless communication with external and/or internal feeding, for example via connection to an external electric network (of the vehicle itself, domestic or other), and/or by means of an integrated battery, for example a rechargeable lithium battery.

According to the invention, the GPS antenna is preferably inside the device and amplified with a switch connector for external antenna, while the GSM antenna is integrated in the circuit.

The new device thus uses, for data transmission, the GPRS and/or UMTS mobile telephony network and/or another technology, sending to a remote terminal unit, in real time, the positioning data taken by the integrated GPS receiver, through a data connection for example of TCP/IP type, as in the case of GPRS.

The new device uses maps as a support, similarly to common satellite positioning devices.

The use of the GPRS network offers the important advantage of enabling the simultaneous management of more devices that communicate with the same remote terminal unit.

The connection to the GPRS network is always active and fees are of the "package" type, that is, depend on the quantity of data transmitted.

In order to reduce the quantity of bytes transmitted and thus to further reduce transmission times and costs, the new device uses a data compression and filtering algorithm before sending them.

The data relating to the position of the device are thus sent to the server or terminal unit with a few bytes, thus substantially reducing transmission costs.

Besides filing the position data (x, y, t) as a function of time (t), it is also possible to store data as "LOG", that is, to store all the operations carried out on the data base, like for example, data inputting, updating, deleting and transferring operations.

Said data can be sent to a web server, with an internet connection reserved to one or more authorized users.

In practice, the new device allows authorized users to be informed in real time and at any moment of the route of the vehicle, traced on the basis of the data received in sequence at short intervals and relating to the position of the device.

Each position data sent to the server or remote terminal unit is individually received and stored, so that data can then be combined and processed according to the needs of the user.

The data can be sent by the device, received and stored in the server or terminal unit with no need for the intervention of an operator, with considerable reduction in labour costs.

In practice, the operation of the new device, with the so-called "human-independent" system, is completely independent of manual operators.

The new device can send data also without GPRS coverage, exploiting the GSM network (in this case, by switch to GSM).

Said microchip is also suited to receive data via said communication module. The microchip can thus be remotely controlled via signals received for example via SMS, radio waves or other, sent by one or more authorized users.

According to the invention, the new device may also comprise a rapid control system active via "Call ID", where, by means of a simple call from one or more mobile telephones or enabled devices, it is possible to control various functions of the device, like transmission of data or sets of data, setting change, etc.

In this case only the user in possession of the identification code can send the command signal right to the device /s that correspond/s to said code. The "Call ID" is in fact a safe method to make the device easily and univocally reachable, in order to transmit the active commands rapidly. Another important innovative aspect of the new device lies in that said microchip uses a web server thanks to which the authorized user/users can interrogate the new device also by accessing a web page of the browser. The user can thus require the transmission of data and/or control other functions.

Furthermore, according to the invention it is also possible to use an external microchip that can considerably extend the technical potential of the device, permitting management of the memory via devices like Personal Computers or compatible PDAs, memory extension etc..

Furthermore, in this way it is possible to exclude communication via radio waves, which is unsafe as it is easily interceptable.

The new device can communicate with one or more external devices via I2C BUS (Philips commercial standard), as I/O ports manageable via software between analogic and digital ports, serial ports, ports for connection to peripheral units (keyboards, displays, etc.) or other.

Said I2C BUS is an internal serial bus, comprising only two lines, one "serial data" line and one "serial clock" line, and implements a communication protocol that makes it possible to work with several so-called "master" (multimaster) devices, thus automatically resolving communication conflicts.

The I2C BUS also offers the advantage of being widely widespread and therefore already included and available in a large number of microcontrollers.

One of the main advantages of the I2C BUS lies in that the device can be interfaced with ports of already existing commercial circuits and in that it is also possible to create circuits dedicated to accessory services, without modifying the primary circuit.

The new device comprises apposite user interface devices, like buzzers, signalling lights, like LEDS of different colours for example according to the condition of the device (on, off, pause, battery charge, data transmission status in GPRS, data transmission in radio waves, etc).

The characteristics of the new device for satellite positioning will be highlighted in greater detail in the following description with reference to the drawing, attached as a non-limiting example.

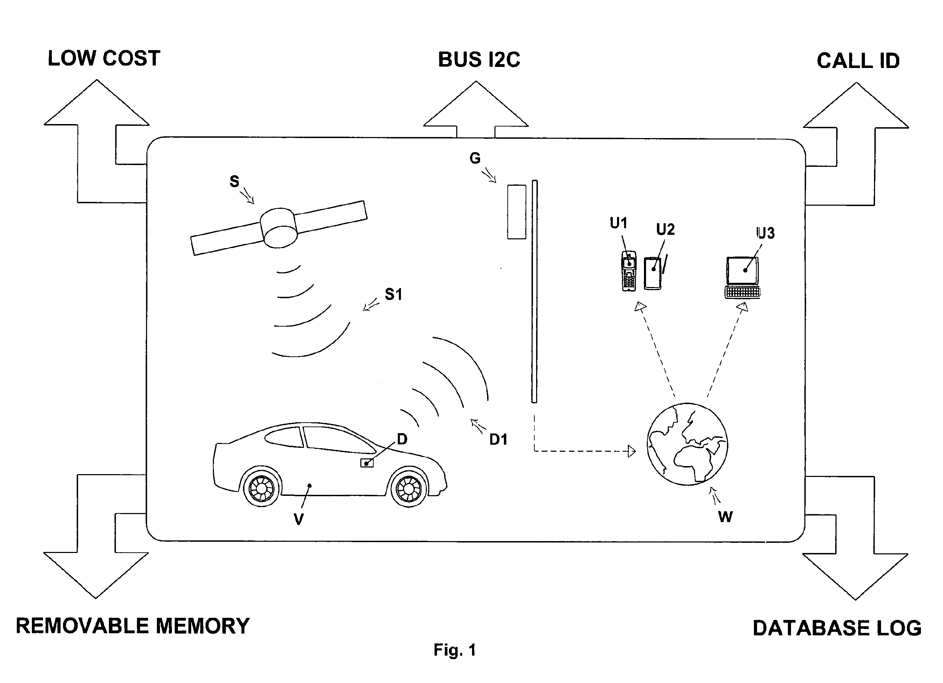

Figure 1 diagrammatically represents the operation of the new device (D), installed for example in a car (V).

The new device (D) comprises, in its main parts, at least one system microchip, at least one GPS receiver (2) for receiving the signals (S1) coming from the satellite (S) and at least one internet communication module (G), where the positioning data (D1) are sent to at least one terminal unit or web server (W), where they can be consulted, processed, stored and managed in various ways.

The new device also comprises at least one removable memory support for storing said data (D1) instead of sending them to the web server or at the same time as they are sent to the web server.

Said remote terminal unit, for example, is a web server (W) suited to communicate, in turn, with one ore more users, like a PC (U3), a mobile telephone (U1), a pocket PC (U2) etc..

Said device (D) can also receive signals (D2) via SMS and/or call ID from one or more users, which can also interrogate the device (D) by accessing a web page.

Therefore, with reference to the above description and the attached drawing, the following claims are expressed.

## Claims

1. Device (D) for satellite positioning, **characterized in that** it comprises:at least one system microchip;
• at least one GPS receiver;
• at least one internet communication module, of the type GPRS and/or UMTS (G), for sending data (D1) to at least one web server (W) for consulting and/or processing and/or storing and/or managing said data (D1);
and wherein said device (D) also comprises at least one removable memory support for storing said data (D1) to be used instead of sending them to the web server or at the same time as they are sent to the web server.

2. Device (D) for satellite positioning according to claim 1, **characterized in that in that** it uses at least one data (D1) compressing and/or filtering algorithm before sending them to said web server (W).

3. Device (D) for satellite positioning according to claim 1 or 2, **characterized in that** said system microchip comprises at least one web server for internet communication.

4. Device (D) for satellite positioning according to claim 1 or 2 or 3, **characterized in that** said system microchip can be remotely controlled by means of signals transmitted in the internet, coming from one or more authorized users and received by said communication module.

5. Device (D) for satellite positioning according to claim 1 or 2 or 3 or 4, **characterized in that** it comprises one or more I2C BUS/BUSES.

6. Device (D) for satellite positioning according to one or more of the preceding claims, **characterized in that** it comprises at least one integrated power supply battery and/or one or more ports for connection to external power supply networks.
